# EUROPÄISCHE PATENTSCHRIFT

(11) **EP 3 553 626 B1**
(45) Veröffentlichungstag und Bekanntmachung des Hinweises auf die Patenterteilung: **17.03.2021**
(21) Anmeldenummer: 19168016.4
(22) Anmeldetag: 09.04.2019
(51) Int. Cl.: G05G 9/047, B60H 1/00, B60H 1/34, G05G 1/02

(54) **BEDIENEINRICHTUNG**
OPERATING DEVICE
DISPOSITIF DE COMMANDE

(30) Priorität: 13.04.2018 DE 102018108785
(43) Veröffentlichungstag der Anmeldung: 16.10.2019
(73) Patentinhaber: Dr. Schneider Kunststoffwerke GmbH, 96317 Kronach-Neuses (DE)
(72) Erfinder: Schneider, Johannes, 96328 Küps (DE)

(56) Entgegenhaltungen:
- JP-A- H05 231 493
- JP-A- 2004 034 974
- US-A- 5 235 868
- US-B2- 6 796 201

## Beschreibung

Es wird eine Bedieneinrichtung zur Ansteuerung mindestens zweier Einrichtungen beschrieben. Die Einrichtungen können Komponenten einer gemeinsamen Vorrichtung oder zwei voneinander unabhängige Einrichtungen sein, die über die Bedieneinrichtung steuerbar sind.

Die Einrichtungen können beispielsweise zur Steuerung der Luftablenkung aus einem Luftausströmer dienen, wobei die erste Einrichtung eine erste Gruppe von Lamellen und die zweite Einrichtung eine zweite Gruppe von Lamellen umfassen können. Solche Luftausströmer können beispielsweise in einem Fahrzeug angeordnet sein. Luftausströmer in Fahrzeugen dienen zur Ablenkung der ausgegebenen Luft, die von einer Klimaanlage oder einer anderen Belüftungseinrichtung zugeführt wird.

Fahrzeuge können beispielsweise Kraftfahrzeuge wie Pkw, Lkw oder Busse, Züge oder Flugzeuge oder Schiffe sein. Bei Luftausströmern kann in der Regel neben der Steuerung der Ablenkung von ausgegebener Luft auch die Menge an ausgegebener Luft geregelt werden. Die Menge der zugeführten Luft kann über eine Einrichtung gesteuert werden, die mittels der Bedieneinrichtung ansteuerbar ist.

Die Bedieneinrichtung kann auch zur Ansteuerung anderer Einrichtungen, wie beispielsweise Ablagefächer mit beweglichen Komponenten, verwendet werden. Zusätzliche Einsatzgebiete umfassen verschwenkbare Blenden oder Spiegel, Cupholder sowie Beleuchtungseinrichtungen.

### Stand der Technik

Es sind verschiedene Bedieneinrichtungen zum Ansteuern verschiedener Funktionen bekannt. Vor allem bei Luftausströmern in Kraftfahrzeugen sind Bedienelemente bekannt, die sowohl eine Ansteuerung zweier Gruppen von Lamellen als auch ein Verschwenken einer Verschließklappe ermöglichen. Die Bedienelemente sind beispielsweise an einer einen Luftausströmer umgebenden Blende oder im Bereich einer Steuerlamelle angeordnet und können verdreht, verschwenkt, verschoben oder in Längsrichtung des Luftkanals verlagert werden. Diese Bedieneinrichtungen ermöglichen es zudem, die einzelnen Komponenten unabhängig voneinander anzusteuern.

Solche Bedienelemente, die mechanisch mit den damit verbundenen Komponenten zusammenwirken, sind auch für andere Einrichtungen, wie beispielsweise Aufnahmefächer, Ablagen und verdreh- bzw. verlagerbare Elemente bekannt.

Diese Bedieneinrichtungen weisen jedoch den Nachteil auf, dass sie von einer Oberfläche oder von einem bewegbaren Element abstehen. Das Abstehen der Bedienelemente ist in vielerlei Hinsicht nachteilig. Zum einen neigen abstehende Bedienelemente und Einrichtungen stets dazu, durch unsachgemäßen Gebrauch oder durch unabsichtliches Anstoßen beschädigt zu werden. Dabei leidet nicht nur die fehlende Bedienbarkeit der ansteuernden Komponenten darunter, sondern auch der Austausch gestaltet sich oftmals schwierig und kostspielig, weil in der Regel die gesamte Einheit ausgetauscht werden muss, da beispielsweise die Bedieneinheit über ein Gestänge und eine Hebelanordnung mit weiteren Komponenten zusammenwirkt. Darüber hinaus leidet das optische Erscheinungsbild durch abstehende Bedienelemente oder Bedieneinrichtungen. Vor allem im Bereich von Kraftfahrzeugen sind die Bedieneinrichtungen oftmals an einer gut sichtbaren Fläche, wie beispielsweise einer Blende im Fahrzeugarmaturenbrett, angeordnet. In letzter Zeit werden auch vermehrt Luftausströmer so gestaltet, dass diese sich in das optische Erscheinungsbild einer Oberfläche im Fahrzeug integrieren. Lediglich die Bedienelemente stehen dann von dieser Oberfläche ab und verschlechtern das optische Erscheinungsbild.

Abstehende Bedienelemente oder Bedieneinrichtungen sind jedoch nicht nur im Bereich der Luftausströmer von Fahrzeugen oder von Ablagesystemen, beispielsweise Cupholdern, störend, sondern auch bei anderen Anwendungen außerhalb eines Fahrzeugs. Abstehende Bedieneinrichtungen beeinträchtigen auch bei nicht fahrzeuggebundenen Einrichtungen das optische Erscheinungsbild und können leicht beschädigt werden.

US 6 796 201 B2 offenbart ein Eingabegerät mit einem innerhalb einer Ebene verschiebbaren Betätigungselement, das auf einem Gleitelement angeordnet ist. Das Gleitelement steht in Wirkverbindung mit zwei Antriebselementen, die jeweils linear verschiebbar und zueinander rechtwinklig angeordnet sind. Diese Antriebselemente sind wiederum jeweils mit einem Erfassungselement gekoppelt. Eine Verschiebung des Betätigungselements bewirkt eine Änderung der Eingriffsposition des Gleitelements in die Antriebselemente und führt zu einer Linearverschiebung der Antriebselemente. Die lineare Verschiebung der Antriebselemente ermöglicht es, deren jeweiliges Erfassungselement zu betreiben und so aus der Auswertung der Positionssignale beider Erfassungselemente die Position des Betätigungselements zu erfassen.

### Aufgabe

Demgegenüber besteht die Aufgabe darin, eine Bedieneinrichtung zur Ansteuerung mindestens zweier Einrichtungen anzugeben, welche einfach ausgebildet ist, weniger störungsanfällig ist, ein optisch ansprechendes Erscheinungsbild bei einer einfachen intuitiven Bedienung aufweist und eine Alternative zu den aus dem Stand der Technik bekannten Bedieneinrichtungen darstellt.

### Lösung

Die vorstehend genannte Aufgabe wird durch eine Bedieneinrichtung zur Ansteuerung mindestens zweier Einrichtungen gelöst, aufweisend eine Zahnplatte mit einer Vielzahl an Zähnen, eine erste Zahnradanordnung mit mindestens einem ersten Zahnrad und eine zweite Zahnradanordnung mit mindestens einem zweiten Zahnrad, wobei
- das mindestens eine erste Zahnrad der ersten Zahnradanordnung und das mindestens eine zweite Zahnrad der zweiten Zahnradanordnung mit den Zähnen der Zahnplatte in Eingriff stehen,
- das mindestens eine erste Zahnrad der ersten Zahnradanordnung und das mindestens eine zweite Zahnrad der zweiten Zahnradanordnung um orthogonal zueinander verlaufende Achsen drehbar gelagert sind,
- die Rückseite der Zahnplatte über eine Öffnung in einer Bedienoberfläche der Bedieneinrichtung zugänglich ist,
- die erste Zahnradanordnung mit einer ersten Einrichtung und die zweite Zahnradanordnung mit einer zweiten Einrichtung koppelbar sind, und
- die Zahnplatte durch zwei in zwei Achsen miteinander verschnittene Zahnstangen gebildet ist.

Die Bedieneinrichtung weist einen sehr einfachen Aufbau auf und ermöglicht es mechanisch eine erste Einrichtung und eine zweite Einrichtung gemeinsam als auch unabhängig voneinander anzusteuern. Die Zahnplatte ist hierzu an der Rückseite der Bedienoberfläche verschiebbar gelagert. Wird die Zahnplatte über die Öffnung an der Vorderseite im Bereich der Bedienoberfläche verschoben, so erfolgt eine Verlagerung des mindestens einen ersten Zahnrads der ersten Zahnradanordnung und/oder eine Verlagerung des mindestens einen zweiten Zahnrads der zweiten Zahnradanordnung. Die erste Zahnradanordnung und die zweite Zahnradanordnung sind mit einer ersten Einrichtung und einer zweiten Zahneinrichtung gekoppelt, sodass eine Übertragung der Bewegung zur Ansteuerung erfolgt.

Der Aufbau weist wenige Bestandteile auf und ist daher auch robust. Zudem weist die Bedieneinrichtung keine abstehenden Elemente auf, die als störend empfunden oder durch Missbrauch sowie eine Fehlbenutzung zerstört werden können. Ein versehentliches Anstoßen und damit auch eine versehentliche Zerstörung sind zudem ausgeschlossen.

Die Zahnplatte als verschiebbares Bedienelement ist lediglich über die Öffnung an der Vorderseite der Bedienoberfläche zugänglich und wird relativ zu der Bedienoberfläche verschoben. Dabei liegt die Zahnplatte in einer Ebene, die parallel zur Bedienoberfläche verläuft und hinter dieser angeordnet ist. Daher benötigt die Bedieneinrichtung keine abstehenden Elemente, an welchen beispielsweise Gegenstände hängen bleiben können. Das Verschieben der Zahnplatte in einer ersten Richtung kann allein die Betätigung einer ersten Einrichtung bewirken. Das Verschieben der Zahnplatte in der zweiten Richtung kann die Betätigung allein einer zweiten Einrichtung bewirken, wobei ein Verschieben der Zahnplatte in beide Richtungen eine entsprechende gemeinsame Betätigung einer ersten und einer zweiten Einrichtung bewirkt.

Die Einrichtungen können beispielsweise eine erste Gruppe von Lamellen und eine zweite Gruppe von Lamellen umfassen, die sowohl gemeinsam verschwenkt werden können als auch unabhängig voneinander. Anstelle von Lamellen können auch andere Luftleitelemente sowie Schließklappen oder Ablenkelemente verschwenkt werden. Zudem ist es möglich, über die Bedieneinrichtung Schließklappen bei Ablagesystemen und Cupholdern zu bewegen. Zudem können auch Beleuchtungseinrichtungen entsprechend verschwenkt werden, um den Fokus einer Beleuchtung zu verändern.

Die Zahnplatte ist durch zwei in zwei Achsen miteinander verschnittene Zahnstangen gebildet. Die Zähne der Zahnplatte sind dabei als Pyramiden ausgebildet, sodass bei einer herkömmlichen Ausbildung der Zahnräder, beispielsweise als Ritzel, eine Verlagerung der Zahnplatte in einer ersten Richtung, in einer zweiten Richtung und in beide Richtungen gemeinsam erfolgen kann. Die Ausbildung der Zähne kann in weiteren Ausführungen auch so sein, dass die Kuppen der Zähne abgerundet sind. Anstelle von pyramidenförmigen Erhebungen können auch kegelförmige Erhebungen oder stiftartige Erhebungen vorgesehen sein, wobei diese dann die Funktion der Zähne übernehmen. Die Ausbildung der Zähne ist daher nicht auf eine herkömmliche Ausbildung beschränkt, sondern definiert gemäß der hierin beschriebenen technische Lehre sämtliche Elemente, die ein in Eingriff bringen mit einem ersten Zahnrad und einem zweiten Zahnrad ermöglichen, um durch eine Verlagerung der Zahnplatte eine entsprechende Rotation der Zahnräder zu bewirken.

An der Rückseite der Bedienoberfläche können Lagerblöcke angeordnet sein. Die Lagerblöcke können zum einen eine Begrenzung der Verschiebebewegung der Zahnplatte bewirken. Vorzugsweise sind dabei vier Lagerblöcke angeordnet, die sich im Wesentlichen gleichmäßig um die Öffnung an der Bedienoberfläche herum an der Rückseite der Bedienoberfläche erstrecken. Die Bedienoberfläche kann beispielsweise Teil einer Blende sein, wobei die Blende die Öffnung aufweist, über welche die Zahnplatte mit ihrer Rückseite zugänglich ist. Der Rand der Öffnung an der Bedienoberfläche kann eine entsprechende Ausgestaltung aufweisen, wobei der Rand beispielsweise eine Fase aufweist. Anstelle einer Fase können auch abgerundete Bereiche vorgesehen sein, die einen Übergang von der Öffnung zu der restlichen Oberfläche der Bedienoberfläche bereitstellen.

In weiteren Ausführungsformen weisen die Lagerblöcke einen solchen Abstand zu der Öffnung auf, dass ein Verschieben der Zahnplatte ausgehend von einer neutralen Position in jede Richtung um einen betragsmäßig gleichen Weg möglich ist. Dabei ist die Zahnplatte entsprechend so ausgebildet, dass diese beispielsweise eine quadratische Form aufweist. Eine Verlagerung in die erste Richtung kann daher sowohl in positiver als auch in negativer Richtung ausgehend von der Neutrallage um einen gleichen Betrag erfolgen. In der zweiten Richtung kann daher ebenfalls eine Verlagerung im positiven wie auch im negativen Sinn um den gleichen Betrag erfolgen. In weiteren Ausführungsformen können jedoch die Öffnung und die Zahnplatte andere Ausgestaltungen und Abstände aufweisen, sodass beispielsweise die Zahnplatte um einen größeren Betrag in eine erste Richtung, in positiver oder in negativer Richtung verschoben werden kann, als in der zweiten Richtung. Zudem kann auch der Abstand der Lagerblöcke unterschiedlich sein, sodass eine größere oder geringere Verlagerung der Zahnplatte möglich ist.

Auch kann die Zahnplatte Bereiche aufweisen, die keine Zähne umfassen, sodass eine Betätigung der Zahnplatte über einen bestimmten Bereich hinweg kein Verdrehen des ersten Zahnrads und/oder des zweiten Zahnrads bewirkt. Zudem kann die Zahnplatte auch so groß ausgebildet sein und mindestens zwei zueinander beabstandete Bereiche mit Zähnen aufweisen, wobei beide Bereiche einem ersten Zahnrad oder einem zweiten Zahnrad zugeordnet sind und die Bereiche über einen Abschnitt ohne Zähne hinweg angeordnet sind. Eine Verlagerung der Zahnplatte kann dabei bewirken, dass ausgehend von einer Nulllage erst eine bestimmte Betätigung, Verschiebung, der Zahnplatte erforderlich ist, um ein in Eingriff bringen des ersten Zahnrads oder des zweiten Zahnrads zu bewirken. Zudem können auch weitere Zahnradanordnungen vorgesehen sein, wobei die Zahnplatte verschiedene Bereiche mit Zähnen aufweist, die über Abschnitte ohne Zähne voneinander getrennt sind, wobei jeder der Abschnitte mit einer separaten Zahnradanordnung in Eingriff steht. Eine Betätigung der Zahnplatte kann daher mehrere Einrichtungen gemeinsam oder unabhängig voneinander verlagern. Zudem ist es auch möglich, dass eine dritte Zahnradanordnung vorgesehen ist, dessen Zahnrad parallel zu dem ersten Zahnrad verdrehbar ist, wobei die Zahnplatte zwei voneinander getrennte Bereiche mit Zähnen aufweist. Nach einem Verschieben der Zahnplatte in einer ersten Richtung um einen ersten Betrag, wobei die erste Zahnradanordnung verdreht wurde, gelangt die Zahnplatte in einen weiteren Abschnitt, in dem die Zähne eines ersten Abschnitts der Zahnplatte nicht mehr mit dem ersten Zahnrad in Eingriff stehen. Über ein weiteres Verlagern gelangen anschließend die Zähne eines weiteren Abschnitts mit dem dritten Zahnrad in Eingriff, sodass bei einer weiteren Verlagerung die dritte Zahnradanordnung betätigt wird und dabei eine dritte Einrichtung ansteuerbar ist. Eine erste Einrichtung und eine dritte Einrichtung sind daher unabhängig voneinander ansteuerbar, wobei lediglich eine Verschiebung der Zahnplatte in der ersten Richtung, im positiven oder im negativen Sinn, erfolgt.

In Abhängigkeit der Ausgestaltung der Zahnplatte mit verschiedenen Abschnitten mit Zähnen, die über Abschnitte ohne Zähne voneinander getrennt sind, und der Anordnung mehrerer Zahnradanordnungen, sind daher verschiedene Einrichtungen gemeinsam und/oder unabhängig voneinander ansteuerbar.

In weiteren Ausführungsformen weist die Öffnung verschiedenartige Formen auf. So kann beispielsweise die Öffnung oval, rund, rechteckig, quadratisch, sternförmig, kreuzförmig etc. ausgebildet sein.

Um eine entsprechende Verlagerung der Zahnplatte realisieren zu können, welche jedoch auch verschiedene Formen aufweisen kann (rechteckig, quadratisch, sternförmig, rund, oval etc.) können auch Führungen im Bereich der Rückseite der Bedienoberfläche vorgesehen sein, welche eine Verlagerung der Zahnplatte unterstützen oder in einer bestimmten Weise beschränken. Zudem können zusätzliche Zahnradanordnungen oder Ritzel vorgesehen sein, die permanent mit den Zähnen der Zahnplatte in Eingriff stehen, und nicht mit einer Einrichtung gekoppelt sind, wobei hierüber eine Führung bereitgestellt wird.

Das mindestens eine erste Zahnrad der ersten Zahnradanordnung und/oder das mindestens eine zweite Zahnrad der zweiten Zahnradanordnung können über die Lagerblöcke drehbar gelagert sein. Die Lagerblöcke können hierzu ferner Öffnung aufweisen, in welchen Lagerzapfen, Lagerwellen oder ähnliche Einrichtungen drehbar gelagert sind, die wiederum mit den Zahnradanordnungen verbunden oder gekoppelt sind und/oder die Zahnräder der Zahnradanordnungen tragen.

Das mindestens eine erste Zahnrad der ersten Zahnradanordnung und das mindestens eine zweite Zahnrad der zweiten Zahnradanordnung können in weiteren Ausführungen um in der gleichen Ebene liegende Achsen drehbar gelagert sein, wobei das mindestens eine erste Zahnrad der ersten Zahnradanordnung und das mindestens eine zweite Zahnrad der zweiten Zahnradanordnung im wesentlichen gleichgroße Außendurchmesser aufweisen. In solchen Ausführungen bewirkt die Verlagerung der Zahnplatte in den beiden Richtungen (gemeinsam oder unabhängig voneinander) eine betragsmäßig entsprechend gleichmäßige Betätigung der jeweiligen Zahnräder, da diese bei einer Verlagerung der Zahnplatte in der ersten Richtung und der zweiten Richtung um einen gleichen Betrag verdreht werden. Eine andere Anordnung, wobei die Drehachsen einen zueinander verschieden Abstand zu der Zahnplatte aufweisen und die Außendurchmesser der Zahnräder sich unterscheiden, bewirkt bei einer Verlagerung in der ersten oder der zweiten Richtung eine größere oder kleinere Rotation des entsprechenden anderen Zahnrads. Hierüber lassen sich verschiedene Ansteuerungen realisieren. Ein betragsmäßig gleiches Verschieben der Zahnplatte in der ersten Richtung und der zweiten Richtung kann daher eine hierüber unterschiedliche Rotation und damit eine verschiedene Betätigung bereitstellen. Zusätzlich können auch Getriebeanordnungen mit den Zahnrädern gekoppelt sein, sodass eine Übersetzung der Drehbewegungen in entsprechende Größen möglich ist.

In weiteren Ausführungsformen sind das mindestens eine erste Zahnrad oder das mindestens eine zweite Zahnrad über ein Verbindungsstück an einer Lagerwelle für das mindestens eine zweite Zahnrad oder das mindestens eine erste Zahnrad drehbar gelagert. Das Verbindungsstück kann beispielsweise einen Lagerzapfen aufweisen, um den das erste oder das zweite Zahnrad drehbar gelagert sind. Zudem kann das Verbindungsstück einen Aufnahmeabschnitt aufweisen, der sich gegenüber der Lagerwelle abstützt. Vorzugsweise weist dieser Aufnahmeabschnitt eine C-förmige Aufnahme auf, die an der Lagerwelle anliegt. Hierüber ist es möglich, gleich große Zahnräder vorzusehen, die um in der gleichen Ebene orthogonal zueinander verlaufende Drehachsen drehbar sind.

Das mindestens eine erste Zahnrad der ersten Zahnradanordnung und/oder das mindestens eine zweite Zahnrad der zweiten Zahnradanordnung können über ihre Lagerwellen oder über die Zahnräder selbst mit der ersten Einrichtung und/oder der zweiten Einrichtung gekoppelt sein. Eine Kopplung über die Lagerwellen oder die Lagerzapfen kann über eine direkte Verbindung mit den Zahnrädern selbst oder eine lösbare/unlösbare Verbindung erfolgen. So kann beispielsweise ein Aufrasten der Zahnräder auf entsprechende Lagerbolzen bzw. Lagerzapfen erfolgen. Neben einem Aufrasten bzw. Aufstecken auf die Zahnräder kann auch eine Zahnradanordnung beispielsweise mindestens zwei auf einer Welle liegende Zahnräder umfassen, wobei die Welle Aufnahmeöffnungen für Lagerbolzen umfasst. In weiteren Ausführungsformen können auch beispielsweise ein erstes Zahnrad oder ein zweites Zahnrad über die Lagerblöcke und ein Verbindungsstück zwischen einer Lagerwelle und dem Lagerblock drehbar gelagert sein.

Mindestens einer der Lagerbolzen oder die Lagerwelle können dann mit der weiteren Einrichtung über ein zusätzliches Zahnrad, einen Riemenantrieb oder eine Hebelanordnung mit den Einrichtungen gekoppelt sein. Darüber hinaus ist es auch möglich, dass die Zahnräder der ersten Zahnradanordnung und der zweiten Zahnradanordnung direkt mit der ersten Einrichtung und der mindestens einen zweiten Einrichtung gekoppelt sind. Hierzu können wiederum Zahnräder, Ritzel, Riemenantriebe oder Hebel sowie Getriebeanordnungen vorgesehen sein.

Die Bedieneinrichtung kann auch elektromechanisch genutzt oder erweitert werden, indem bspw. Potentiometer mit dem mindestens einen ersten Zahnrad und/oder dem mindestens einen zweiten Zahnrad gekoppelt werden und die Position der Zahnplatte so elektrisch übertragen wird.

Der über die Öffnung zugängliche Bereich der Rückseite der Zahnplatte kann eine Vertiefung aufweisen. Die Vertiefung dient als Bedienhilfe für einen Benutzer, wobei in die Mulde eine Fingerkuppe eingelegt werden kann. Zudem kann die Vertiefung bzw. eine Mulde eine Neutralposition definieren. Befindet sich die Mulde im Wesentlichen mittig zu der Öffnung so kann in einer weiteren Ausführungsform dies eine Neutralstellung darstellen. Wird die Zahnplatte verschoben, so wird automatisch auch eine Verlagerung der Vertiefung erreicht, wobei über die Vertiefung anschließend die Stellung der Zahnplatte und der damit gekoppelten Einrichtungen von außen sichtbar sind. Hierzu kann der Rand an der Öffnung an der Bedienoberfläche Bereiche mit einer Beschriftung oder Markierungen aufweisen. Diese geben an, welche Betätigung beispielsweise vorliegt oder in welche Richtung beispielsweise ein Luftstrom abgegeben wird. Vorzugsweise sind die Zahnradanordnungen mit den Einrichtungen so gekoppelt, dass bei einem Luftausströmer eine intuitive Steuerung gegeben wird, wobei eine Verlagerung der Zahnplatte in Blickrichtung auf die Bedieneinrichtung von der Bedienoberfläche aus gesehen nach links ein entsprechendes Ablenken des Luftstroms nach links bewirkt.

Vorzugsweise erfolgt die Ausgestaltung der Vertiefung oder anderer Elemente im Bereich der Rückseite der Zahnplatte in Abhängigkeit der möglichen Verschiebung der Zahnplatte, beispielsweise zwischen Lagerblöcken, sodass eine Verlagerung der Zahnplatte über einen bestimmten Bereich hinaus, in welchem die Vertiefung nicht mehr zugänglich wäre, ausgeschlossen ist. Die Abstimmung der einzelnen Komponenten erfolgt daher nach Maßgabe der zu erfolgenden Betätigung. Um bei geringeren Verschiebebewegungen auch größere Bewegungen realisieren zu können, können insbesondere Hebelanordnungen oder Getriebeanordnungen vorgesehen sein, die eine entsprechende Übertragung einer betragsmäßig geringen Verlagerung der Zahnplatte bewirken.

Mindestens der über die Öffnung zugängliche Bereich der Rückseite der Zahnplatte kann mindestens eine Markierung, ein Symbol und/oder einen beleuchtbaren Bereich aufweisen. Eine Beleuchtung kann auch dadurch realisiert werden, dass die Zahnplatte mindestens partiell aus einem durchleuchtbaren Kunststoff besteht und eine Beleuchtungseinrichtung an der Rückseite der Bedienoberfläche, beispielsweise über Lichtleiter oder Leiterbahnen und ein Leuchtmittel (z. B. LED) eine Beleuchtung in den Kunststoff einbringt. An der Rückseite der Zahnplatte, die von außen sichtbar ist, kann eine Beschichtung auf den Kunststoff aufgebracht sein, sodass nur bestimmte Bereiche, beleuchtbar sind. Auch kann die Bedienoberfläche, beispielsweise im die Öffnung umgebenden Bereich beleuchtbar sein, um auch bei Nacht eine Ansteuerung bereitstellen zu können.

An der Zahnplatte und/oder an den Lagerblöcken können in weiteren Ausführungsformen Dämpfungselemente angeordnet sein. Die Dämpfungselemente können aus einem Elastomer bestehen oder ein Elastomer aufweisen. Als Elastomere sind hierfür beispielsweise thermoplastische Elastomere bekannt. Auch eigenen sich Silikone für Dämpfungselemente, da diese über einen hohen Temperaturbereich lange Zeit einsetzbar sind, ohne ihre dämpfenden Eigenschaften zu verlieren. Die dämpfenden Eigenschaften können beispielsweise dazu verwendet werden, um ein Anschlagen der Zahnplatte beim Verschieben an den Lagerblöcken zu verhindern oder im Endbereich eine dämpfende Anlage bereitzustellen. In weiteren Ausführungsformen können auch Ritzel aus einem dämpfenden Material vorgesehen sein, die mit der Zahnplatte in Eingriff stehen, wobei eine Verlagerung der Zahnplatte über die Elastomer-/Silikonritzel gedämpft wird.

Die Bedieneinrichtung und die Komponenten können vorzugsweise aus Kunststoff bestehen und sind daher in einem Spritzgussprozess in hoher Stückzahl kostengünstig herstellbar. Zudem kann das Anbringen der Dämpfungselemente in einem Zweikomponenten Spritzgussverfahren erfolgen, sodass auf zusätzliche Bearbeitungsschritte verzichtet werden kann.

Aufgrund der geringen Bestandteile der Bedieneinrichtung unterliegt diese auch geringeren Anforderungen hinsichtlich von Toleranzen, da die Toleranzkette bei wenigen Bauteilen deutlich reduziert ist.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Darstellung einer Bedieneinrichtung;
- Fig. 2: eine weitere perspektivische Darstellung der Bedieneinrichtung;
- Fig. 3: eine Explosionsdarstellung der Bedieneinrichtung;
- Fig. 4: eine Rückansicht der Bedieneinrichtung;
- Fig. 5: eine Schnittansicht der Bedieneinrichtung entlang der Ebene A-A;
- Fig. 6: eine Schnittansicht der Bedieneinrichtung entlang der Ebene B-B; und
- Fig. 7: eine Draufsicht auf die Bedienoberfläche der Bedieneinrichtung mit schematisch angedeuteten Stellungen der Zahnplatte.

In den Zeichnungen mit gleichen Bezugszeichen versehene Komponenten entsprechen im Wesentlichen einander, sofern nichts anderes angegeben ist. Darüber hinaus wird darauf verzichtet, Bestanteile zu beschreiben und zu zeigen, welche nicht wesentlich zum Verständnis der hierin offenbarten technischen Lehre sind.

### Ausführliche Beschreibung eines Ausführungsbeispiels

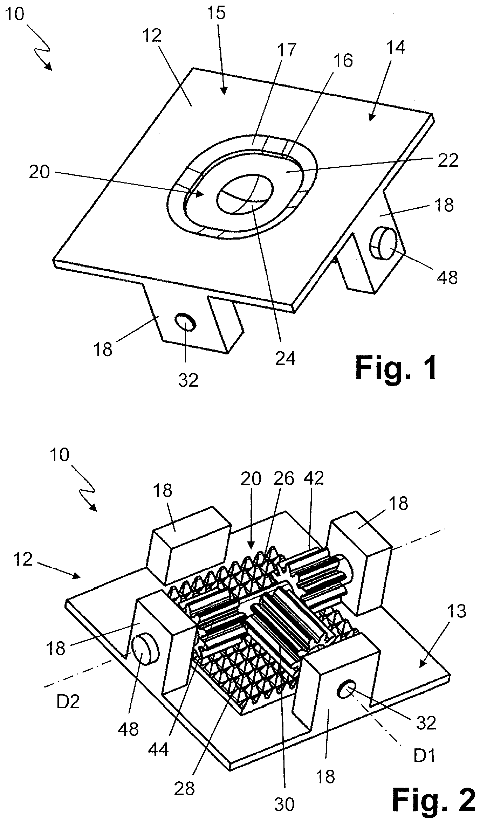

Fig. 1 zeigt eine perspektivische Darstellung einer Bedieneinrichtung 10. Die Bedieneinrichtung 10 der hierin gezeigten Ausführungsform dient zum Verschwenken von Luftleitelementen eines Luftausströmers in einem Fahrzeug. Hierzu ist die Bedieneinrichtung 10 in einem Fahrzeugarmaturenbrett integriert, wobei die Bedieneinrichtung 10 Bestandteil eines Dekorelements eines Armaturenbretts sein kann. In der in Fig. 1 gezeigten Ausführungsform weist die Bedieneinrichtung 10 eine Blende 12 auf. Die Blende 12 kann Teil der Oberfläche des Fahrzeugarmaturenbretts sein und weist hierzu die gleiche Oberflächenbeschaffenheit und Gestalt auf, wie der weitere Dekorbereich des Armaturenbretts. Die Bedieneinrichtung 10 befindet sich in der Umgebung eines Luftausströmers und dient zum Verschwenken der Luftleitelemente. Hierzu ist die Bedieneinrichtung 10 über eine erste Zahnradanordnung und eine zweite Zahnradanordnung 40 mit den Luftleitelementen zum Verschwenken gekoppelt. Die Bedieneinrichtung 10 ist hierzu über ein erstes Zahnrad 30 der ersten Zahnradanordnung mit einem Ritzel gekoppelt, welches über eine entsprechende Mechanik mit den Luftleitelementen einer ersten Gruppe von Lamellen verbunden ist. Die Zahnräder 42 und 44 der zweiten Zahnradanordnung 40 stehen mit einer zweiten Gruppe von Lamellen über ein entsprechendes weiteres Ritzel in Wirkverbindung. Eine Rotation der ersten Zahnradanordnung und der zweiten Zahnradanordnung 40 bewirkt dabei ein entsprechendes Verschwenken der Luftleitelemente, was wiederum zum Ablenken eines Luftstroms dient. Die Übertragung der Drehbewegung der Zahnradanordnungen kann dabei auf verschiedene Art und Weise erfolgen, wobei einem Fachmann aus dem Stand der Technik verschiedene Übertragungsmöglichkeiten, einschließlich Getriebe, Hebelanordnungen, Ritzel und Kurvenscheiben sowie Koppelstangen bekannt sind.

Die Bestandteile der Bedieneinrichtung 10 bestehen aus Kunststoff und sind daher in einem Spritzgussprozess in hoher Stückzahl kostengünstig herzustellen. Die Oberfläche der Bedienoberfläche 14 an der Vorderseite 15 der Blende 12 weist eine dem Dekorbereich angepasste Oberflächengestaltung und Struktur auf. Die Vorderseite 15 kann auch gewölbt oder gekrümmt sein, solange die dahinter angeordnete Rückseite 13 (siehe beispielsweise Fig. 2) eine parallele Verlagerung einer Zahnplatte 20 ermöglicht. Dies bedeutet, dass die Vorderseite 15 eine andere Gestalt aufweisen kann als die Rückseite 13. Die Blende 12 weist eine Öffnung 16 auf, die von einem Rand 17 umgeben ist. Der Rand 17 ist leicht schräg ausgebildet und bildet einen Übergang von der Vorderseite 15 der Bedienoberfläche 14 zu der Öffnung 16 und dem über die Öffnung 16 zugänglichen, als Zahnplatte 20 ausgebildeten Bedienelement. Die Zahnplatte 20 weist an ihrer Rückseite 22, über welche die Zahnplatte 20 mit Blick auf die Bedieneinrichtung 10 über die Öffnung 16 sichtbar ist, eine Mulde 24 auf. Die Mulde 24 kann geriffelt sein oder eine anderweitige Oberflächenbeschaffenheit aufweisen, sodass hierüber eine Betätigung und Verlagerung der Zahnplatte 20 mittels eines Fingers einer Bedienperson erfolgen kann. Die Gestalt der Rückseite 22 kann identisch, unterschiedlich oder ähnlich der Oberflächengestalt an der Vorderseite 15 der Bedienoberfläche 14 sein. Zudem kann die Mulde 24 eine ähnliche oder gleiche Oberflächengestalt aufweisen oder hierzu unterschiedlich ausgebildet sein. Gleiches gilt für den Rand 17, der beispielsweise nur bereichsweise eine unterschiedliche Ausgestaltung aufweisen kann, wobei die vier schematisch angedeuteten Bereiche (oben/unten, links/rechts) eine andere Gestalt aufweisen und/oder beleuchtbar sein können.

Um ein entsprechendes Verschwenken der Lamellen zur Änderung der Luftablenkung durchzuführen, wird die Zahnplatte 20 verschoben. Ein Verschieben der Zahnplatte 20 bewirkt über die an der Rückseite 13 angeordnete erste Zahnradanordnung und zweite Zahnradanordnung 40 eine Rotation dieser und damit eine Übertragung der Verschiebebewegung auf die erste Gruppe von Lamellen und/oder die zweite Gruppe von Lamellen.

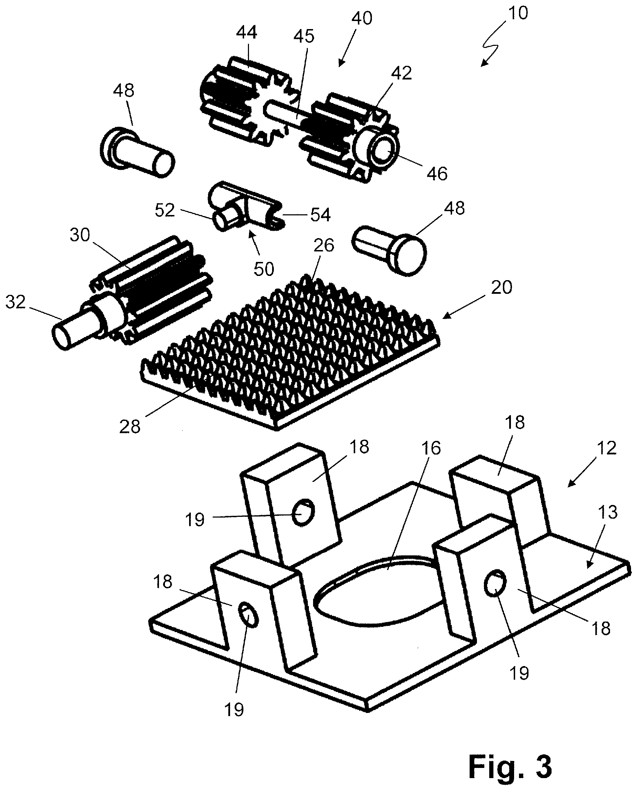

Hierzu weist die Blende 12 an ihrer Rückseite vier Lagerblöcke 18 auf, wie in Fig. 2 in einer weiteren perspektivischen Darstellung der Bedieneinrichtung 10 gezeigt. Drei der Lagerblöcke 18 weisen zudem Öffnungen 19 auf, siehe Fig. 3, in welchen eine Lagerwelle 32 des ersten Zahnrads 30 und Lagerzapfen 48 der zweiten Zahnradanordnung 40 aufgenommen sind. Über die Lagerwelle 32 ist das erste Zahnrad 30 um die Drehachse D1 drehbar gelagert. Das erste Zahnrad 30 steht in Eingriff mit den Zähnen 28 an der Vorderseite 26 der Zahnplatte 20. Das zweite Zahnrad 42 und das dritte Zahnrad 44 der zweiten Zahnradanordnung 40 stehen ebenfalls in Eingriff mit den Zähnen 28 der Zahnplatte 20. Hierzu sind das zweite Zahnrad 42 und das dritte Zahnrad 44 um die Drehachse D2 drehbar gelagert. Die Drehachse D1 und die Drehachse D2 verlaufen orthogonal zueinander. Ein Verschieben der Zahnplatte 20 entlang der Drehachse D1 bewirkt daher eine Rotation des zweiten Zahnrads 42 und des dritten Zahnrads 44. Ein Verschieben der Zahnplatte 20 entlang der Drehachse D2 bewirkt eine Rotation des ersten Zahnrads 30 um die Drehachse D1. Eine Verlagerung der Zahnplatte 20 sowohl in der ersten Richtung als auch in der zweiten Richtung bewirkt aufgrund der Ausbildung der Zähne 28 sowohl eine Rotation der ersten Zahnradanordnung mit dem ersten Zahnrad 30 um die Drehachse D1 als auch eine Rotation des zweiten Zahnrads 42 und des dritten Zahnrads 44 der zweiten Zahnradanordnung 40 um die Drehachse D2.

Anstelle zweier Zahnräder 42 und 44 für die zweite Zahnradanordnung 40 könnte auch nur ein Zahnrad 42/44 vorgesehen sein.

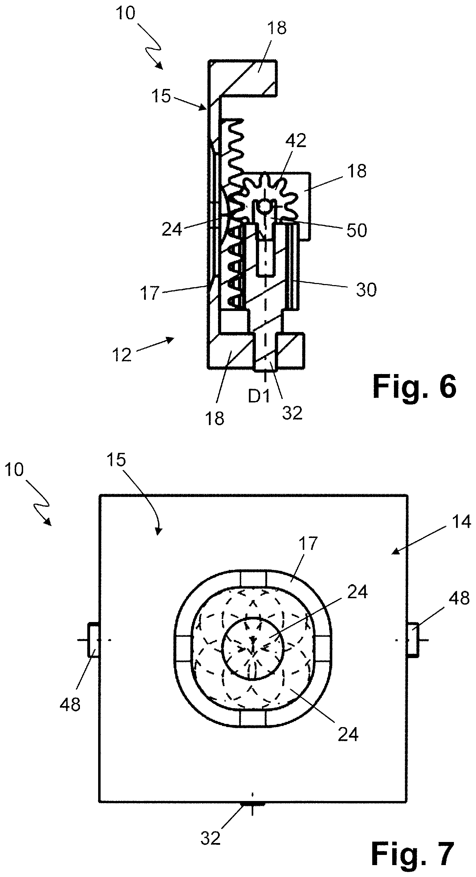

Die Zähne 28 der Zahnplatte 20 sind durch in zwei Achsen miteinander verschnittene Zahnstangen gebildet. Die Zähne 28 weisen eine im Wesentlichen pyramidenförmige Gestalt auf, sodass ein Verschieben der Zahnplatte 20 sowohl in der ersten Richtung als auch in der zweiten Richtung sowie gemeinsam in beide Richtungen möglich ist. Bei der in den Figuren gezeigten Ausführungsform ist die Zahnplatte 20 quadratisch ausgebildet und der Abstand der Zahnplatte 20 zu den Lagerblöcken 18 ist in der Neutralstellung gleich groß. Die Lagerblöcke 18 dienen dabei nicht nur zur drehbaren Lagerung der Zahnradanordnungen sondern begrenzen auch den maximalen Verschiebeweg der Zahnplatte 20. Die Ausbildung der Zahnplatte 20 sowie der Bedieneinrichtung 10 allgemein ist dabei auch so gewählt, dass die Mulde 24 in sämtlichen maximal verschobenen Zuständen über die Öffnung 16 zugänglich ist. Die Position der Mulde 24 gibt dabei auch an, in welche Richtung die Zahnplatte 20 verschoben worden ist (siehe Fig. 7), wodurch auch eine Luftablenkung für die erste Gruppe von Lamellen und die zweite Gruppe von Lamellen des Luftausströmers sichtbar sind.

Die Rückseite 13 weist zumindest im Verschiebebereich für die Zahnplatte 20 eine glatte Oberfläche auf. Ebenso erstreckt sich die Zahnplatte 20 parallel zu der Rückseite 13, sodass ein leichtgängiges Verschieben möglich ist. Über die Ausbildung der Zahnräder 30, 42 und 44 sowie die Ausbildung der Zahnplatte 20, insbesondere der Zähne 28 kann auch, ebenso wie über die Anordnung der Komponenten zueinander, eine maximale Bedienkraft zum Verschieben der Zahnplatte 20 eingestellt werden. In weiteren Ausführungsformen können die Zähne 28 und/oder die Zahnräder 30, 42 und 44 aus einem verformbaren Material bestehen, wobei die Verformbarkeit so gewählt ist, dass eine Verschiebung der Zahnplatte 20 eine Rotation der Zahnräder 30, 42 und 44 bewirkt, hierzu aber eine dämpfende Wirkung bereitgestellt wird. Die Ausbildung der Zahnräder 30, 42 und 44 kann hierbei ähnlich zu Silikonritzeln sein, die als Dämpfungselemente mit Zahnstangen oder ähnlichen Einrichtungen gekoppelt sind. Gleiches gilt für die Zähne 28, die ebenfalls aus einem zumindest teilelastischen Material, wie thermoplastische Elastomere oder Silikon, bestehen können. Die Zahnräder 30, 42 und 44 und/oder die Zähne 28 können auch eine Beschichtung aus einem dämpfenden Material aufweisen.

Fig. 3 zeigt eine Explosionsdarstellung der Bedieneinrichtung 10. Die Bedieneinrichtung 10 zeichnet sich dadurch aus, dass diese wenige Bestandteile aufweist und dadurch sehr robust ist. Die Blende 12 weist wie bereits beschrieben, die Öffnung 16 auf, über welche die Rückseite 22 der Zahnplatte 20 bereichsweise zugänglich ist. Über die Lagerblöcke 18 wird der Verschiebeweg der Zahnplatte 20 begrenzt. Zudem dienen die Lagerblöcke 18 für die Lagerung der Zahnräder 30 der ersten Zahnradanordnung und der Zahnräder 44 und 42 der zweiten Zahnradanordnung 40. In die Öffnungen 19 der beiden gegenüberliegenden Lagerblöcke 18 mit den Öffnungen 19 werden die Lagerzapfen 48 der zweiten Zahnradanordnung 40 eingesteckt. Die Lagerwelle 32 wird in die Öffnung 19 des Lagerblocks 18 eingesetzt, welche dem Lagerblock 18 ohne Öffnung gegenüberliegt. Dieser Lagerblock weist eine geringere Höhe auf, da keine Öffnung 19 erforderlich ist.

Die Zahnräder 42 und 44 der zweiten Zahnradanordnung 40 sind über eine Lagerwelle 45 direkt miteinander verbunden. An den gegenüberliegenden Seiten weisen die Zahnräder 42 und 44 jeweils eine Öffnung 46 auf. In die Öffnungen 46 werden die Lagerzapfen 48 eingesetzt. Hierzu kann eine Rastverbindung erfolgen, wobei beispielsweise Rastelemente innerhalb der Öffnung 46 in eine Nut oder Rastausnehmung im Bereich der wellenartigen Abschnitte der Lagerzapfen 48 eingreifen oder die wellenartigen Abschnitte der Lagerzapfen 48 weisen entsprechende Vorsprünge auf, die beispielsweise in eine umlaufende Nut im Bereich der Öffnungen 46 eingreifen.

Zusätzlich ist ein Verbindungsstück 50 vorgesehen, das einen Lagerzapfen 52 aufweist, der in einer in Fig. 6 im Schnitt schematisch gezeigten Öffnung des ersten Zahnrads 30 aufgenommen ist. Das erste Zahnrad 30 ist hierüber drehbar um den Lagerzapfen 52 am Verbindungsstück 50 gelagert. Das Verbindungsstück 50 weist zudem eine C-förmige Aufnahme 54 auf. Im zusammengesetzten Zustand der Bedieneinrichtung 10 stützt sich die Aufnahme 54 an der Lagerwelle 45 ab. Die Lagerwelle 45 kann dabei verdreht werden, ohne dass dies einen Einfluss auf das Verbindungsstück 50 hat. Eine Rotation der ersten Zahnradanordnung mit dem Zahnrad 30 und der zweiten Zahnradanordnung 40 mit den Zahnrädern 42 und 44 ist daher unabhängig voneinander möglich. Zudem können die einzelnen Zahnräder 30, 42 und 44 aber auch gemeinsam um ihre Drehachsen D1 und D2 verdreht werden.

Der Zusammenbau der Bedieneinrichtung 10 kann derart erfolgen, dass zuerst die Zahnplatte 20 auf die Rückseite 13 aufgesetzt wird. Anschließend wird das erste Zahnrad 30 auf die Vorderseite 26 der Zahnplatte 20 aufgesetzt und soweit in Richtung des zugehörigen Lagerblocks 18 verschoben, bis die Lagerwelle 32 in der korrespondierenden Öffnung 19 aufgenommen ist. Anschließend wird das Verbindungsstück 50 eingebracht, wobei der Lagerzapfen 52 in die korrespondierende Öffnung des ersten Zahnrads 30 eingesetzt wird. Danach werden das zweite Zahnrad 42 und das dritte Zahnrad 44 auf die Vorderseite 26 der Zahnplatte 20 aufgesetzt und soweit verlagert, bis die Lagerwelle 45 in der C-förmigen Aufnahme 54 anliegt bzw. darin aufgenommen ist. Anschließend werden die Lagerzapfen 48 über die Öffnungen 19 bei den gegenüberliegenden Lagerblöcken 18 eingesetzt, bis diese in den Öffnungen 46 aufgenommen sind.

Beim Zusammenbau der Bedieneinrichtung 10 kann zu Beginn die Zahnplatte 20 auch erst derart positioniert werden, dass diese an dem Lagerblock 18 anliegt, der dem Lagerblock 18 ohne Öffnung 19 gegenüberliegt (Lagerblock für das erste Zahnrad 30), wobei nach dem Einbringen der ersten Zahnradanordnung 40 eine Rotation des zweiten Zahnrads 42 und des dritten Zahnrads 44 erfolgt, da diese in Richtung des Verbindungsstücks 50 verlagert werden müssen. Anschließend befindet sich dann die Zahnplatte 20 in ihrer Neutralposition, wenn die Lagerwelle 45 in der C-förmigen Aufnahme 54 aufgenommen ist. In weiteren Ausführungsformen kann auch ein leichtes Anheben einzelner Bestandteile erfolgen, sodass keine Verlagerung der Zahnplatte 20 beim Zusammenbau notwendig ist.

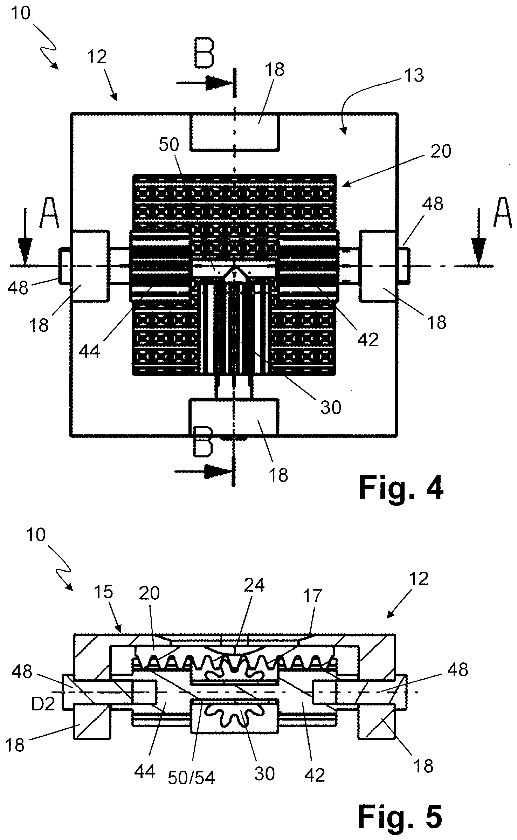

Fig. 4 zeigt eine Rückansicht der Bedieneinrichtung 10. Die Bedieneinrichtung 10 weist in dieser Darstellung ihre Neutralstellung auf. Die Zahnplatte 20 ist hierbei nicht verlagert. Wie ferner ersichtlich ist, weist die Zahnplatte 20 eine quadratische Gestalt auf und weist zu den gegenüberliegenden Lagerblöcken 18 den gleichen Abstand auf. Fig. 4 zeigt auch die Anordnung der Zahnräder 30, 42 und 44 über das Verbindungsstück 50. In sämtlichen Stellungen der Zahnplatte 20 steht diese in Eingriff mit den Zahnrädern 30, 42 und 44. Ein Verlassen des Eingriffs wird durch den Abstand der Lagerblöcke 18 zu der Zahnplatte 20 und der Anordnung der Zahnräder 30, 42 und 44 verhindert.

Fig. 5 zeigt eine Schnittansicht der Bedieneinrichtung 10 entlang der Ebene A-A von Fig. 4. Sämtliche Zahnräder 30, 42 und 44 stehen mit den Zähnen 28 der Zahnplatte 20 in Eingriff. Ein Verschieben der Zahnplatte 20 über die Mulde 24 bewirkt dann eine Rotation der entsprechenden Zahnräder 30, 42 und 44, welche dann um die Drehachse D1 und die Drehachse D2 verdreht werden.

Fig. 6 zeigt eine Schnittansicht der Bedieneinrichtung 10 entlang der Ebene B-B von Fig. 4. In der gezeigten Ausführungsform ist die Lagerwelle 32 als gestufte Lagerwelle direkt am ersten Zahnrad 30 angeordnet. Über die gestufte Ausbildung wird die Position des ersten Zahnrads 30 relativ zu dem Lagerblock 18 festgelegt. Die Ausbildung des Lagerzapfens 52 am Verbindungsstück 50 definiert zusätzlich die Position des ersten Zahnrads 30, welches im zusammengebauten Zustand nur noch um die Drehachse D1 verdreht werden kann. Die Position des Verbindungsstücks 50 sowie des ersten Zahnrads 30 erfolgt über die Anordnung der Zahnräder 42 und 44, die über die Lagerzapfen 48 im zusammengebauten Zustand ihre definierte Position einnehmen. Die Zahnräder 42 und 44 sind über die Lagerwelle 45 direkt miteinander verbunden.

Schließlich zeigt Fig. 7 eine Draufsicht auf die Bedienoberfläche 14 der Bedieneinrichtung 10 mit schematisch angedeuteten Stellungen der Zahnplatte 20 über die Mulde 24. In Fig. 7 sind gestrichelt verschiedene Positionen der Mulde 24 gezeigt. Selbstverständlich können noch weitere Zwischenstellungen eingenommen werden. Die Darstellung zeigt lediglich, dass sowohl ein Verschieben der Zahnplatte 20 nach oben und unten bzw. nach rechts und links als auch ein schräges Verschieben erfolgen kann, wobei dies sowohl zu einer Rotation des ersten Zahnrads 30 der ersten Zahnradanordnung als auch zu einer Rotation der Zahnräder 42 und 44 der zweiten Zahnradanordnung 40 führt. Entsprechend erfolgt dann eine Betätigung der damit verbundenen Einrichtungen.

### Bezugszeichenliste

- 10: Bedieneinrichtung
- 12: Blende
- 13: Rückseite
- 14: Bedienoberfläche
- 15: Vorderseite
- 16: Öffnung
- 17: Rand
- 18: Lagerblock
- 19: Öffnung
- 20: Zahnplatte
- 22: Rückseite
- 24: Mulde
- 26: Vorderseite
- 28: Zähne
- 30: erstes Zahnrad
- 32: Lagerwelle
- 40: zweite Zahnradanordnung
- 42: zweites Zahnrad
- 44: drittes Zahnrad
- 45: Lagerwelle
- 46: Öffnung
- 48: Lagerzapfen
- 50: Verbindungsstück
- 52: Lagerzapfen
- 54: C-förmige Aufnahme
- D1: Drehachse
- D2: Drehachse

## Patentansprüche

1. Bedieneinrichtung zur Ansteuerung mindestens zweier Einrichtungen, aufweisend eine Zahnplatte (20) mit einer Vielzahl an Zähnen (28), eine erste Zahnradanordnung mit mindestens einem ersten Zahnrad (30) und eine zweite Zahnradanordnung (40) mit mindestens einem zweiten Zahnrad (42), wobei
- das mindestens eine erste Zahnrad (30) der ersten Zahnradanordnung und das mindestens eine zweite Zahnrad (42) der zweiten Zahnradanordnung (40) mit den Zähnen (28) der Zahnplatte (20) in Eingriff stehen,
- das mindestens eine erste Zahnrad (30) der ersten Zahnradanordnung und das mindestens eine zweite Zahnrad (42) der zweiten Zahnradanordnung (40) um orthogonal zueinander verlaufende Achsen drehbar gelagert sind,
- die Rückseite (22) der Zahnplatte (20) über eine Öffnung (16) in einer Bedienoberfläche (14) der Bedieneinrichtung (10) zugänglich ist,
- die erste Zahnradanordnung mit einer ersten Einrichtung und die zweite Zahnradanordnung (40) mit einer zweiten Einrichtung koppelbar sind, und
- die Zahnplatte (20) durch zwei in zwei Achsen miteinander verschnittene Zahnstangen gebildet ist.

2. Bedieneinrichtung nach Anspruch 1, wobei an der Rückseite (13) der Bedienoberfläche (14) Lagerblöcke (18) angeordnet sind.

3. Bedieneinrichtung nach Anspruch 2, wobei das mindestens eine erste Zahnrad (30) der ersten Zahnradanordnung und/oder das mindestens eine zweite Zahnrad (42) der zweiten Zahnradanordnung (40) über die Lagerblöcke (18) drehbar gelagert sind.

4. Bedieneinrichtung nach einem der Ansprüche 1 bis 3, wobei das mindestens eine erste Zahnrad (30) der ersten Zahnradanordnung und das mindestens eine zweite Zahnrad (42) der zweiten Zahnradanordnung (40) um in der gleiche Ebene liegende Achsen drehbar gelagert sind und im Wesentlichen gleich große Außendurchmesser aufweisen.

5. Bedieneinrichtung nach Anspruch 4, wobei das mindestens eine erste Zahnrad (30) oder das mindestens eine zweite Zahnrad (42) über ein Verbindungsstück (50) an einer Lagerwelle (45) für das mindestens eine zweite Zahnrad (42) oder das mindestens eine erste Zahnrad (30) drehbar gelagert ist.

6. Bedieneinrichtung nach einem der Ansprüche 1 bis 5, wobei das mindestens eine erste Zahnrad (30) der ersten Zahnradanordnung und/oder das mindestens eine zweite Zahnrad (42) der zweiten Zahnradanordnung (40) über ihre Lagerwellen (45) oder über die Zahnräder (30; 42; 44) selbst mit der ersten Einrichtung und/oder der zweiten Einrichtung gekoppelt sind.

7. Bedieneinrichtung nach einem der Ansprüche 1 bis 6, wobei der über die Öffnung (16) zugängliche Bereich der Rückseite (22) der Zahnplatte (20) eine Vertiefung aufweist.

8. Bedieneinrichtung nach einem der Ansprüche 1 bis 7, wobei mindestens der über die Öffnung (16) zugängliche Bereich der Rückseite (22) der Zahnplatte (20) mindestens eine Markierung, ein Symbol und/oder einen beleuchtbaren Bereich aufweist.

9. Bedieneinrichtung nach einem der Ansprüche 1 bis 8, wobei an der Zahnplatte (20) und/oder an den Lagerblöcken (18) Dämpfungselemente angeordnet sind.

## Claims

1. Operating device for activating at least two devices, comprising a toothed plate (20) with a plurality of teeth (28), a first gearwheel arrangement with at least one first gearwheel (30) and a second gearwheel arrangement (40) with at least one second gearwheel (42), wherein
- the at least one first gearwheel (30) of the first gearwheel arrangement and the at least one second gearwheel (42) of the second gearwheel arrangement (40) are in mesh with the teeth (28) of the toothed plate (20),
- the at least one first gearwheel (30) of the first gearwheel arrangement and the at least one second gearwheel (42) of the second gearwheel arrangement (40) are mounted to be rotatable about axes extending orthogonally to one another,
- the rear side (22) of the toothed plate (20) is accessible by way of an opening (16) in a control surface (14) of the operating device (10),
- the first gearwheel arrangement can be coupled with a first device and the second gearwheel arrangement (40) can be coupled with a second device and
- the toothed plate (20) is formed by two racks merged with one another in two axes.

2. Operating device according to claim 1, wherein bearing blocks (18) are arranged at the rear side (13) of the control surface (14).

3. Operating device according to claim 2, wherein the at least one first gearwheel (30) of the first gearwheel arrangement and/or the at least one second gearwheel (42) of the second gearwheel arrangement (40) is or are rotatably mounted by way of the bearing blocks (18).

4. Operating device according to any one of claims 1 to 3, wherein the at least one first gearwheel (30) of the first gearwheel arrangement and the at least one second gearwheel (42) of the second gearwheel arrangement (40) are mounted to be rotatable about axes lying in the same plane and have substantially the same-size outer diameter.

5. Operating device according to claim 4, wherein the at least one first gearwheel (30) or the at least one second gearwheel (42) is rotatably mounted by way of a connecting member (50) on a bearing shaft (45) for the at least one second gearwheel (42) or the at least one first gearwheel (30).

6. Operating device according to any one of claims 1 to 5, wherein the at least one first gearwheel (30) of the first gearwheel arrangement and/or the at least one second gearwheel (42) of the second gearwheel arrangement (40) is or are coupled by way of the bearing shaft or shafts (45) thereof or by way of the gearwheel itself or gearwheels themselves(30; 42; 44) with the first device and/or the second device.

7. Operating device according to any one of claims 1 to 6, wherein the region, which is accessible by way of the opening (16), of the rear side (22) of the toothed plate (20) has a depression.

8. Operating device according to any one of claims 1 to 7, wherein at least the region of the rear side (22) of the toothed plate (20) accessible by way of the opening (16) has at least one marking, symbol and/or illuminatable area.

9. Operating device according to any one of claims 1 to 8, wherein damping elements are arranged at the toothed plate (20) and/or at the bearing blocks (18).

## Revendications

1. Dispositif de commande pour commander au moins deux dispositifs, comprenant une plaque dentée (20) avec un grand nombre de dents (28), une première disposition de roue dentée avec
au moins une première roue dentée et une deuxième disposition de roue dentée (40) avec au moins une deuxième roue dentée (42), dans laquelle
- au moins une première roue dentée (30) de la première disposition de roue dentée et
qu'au moins une deuxième roue dentée (42) de la deuxième disposition de roue dentée (40) est en prise avec les dents (28) de la plaque dentée (20),
- au moins une première roue dentée (30) de la première disposition de roue dentée et au moins une deuxième
roue dentée (42) de la deuxième disposition de roue dentée (40) sont montés en rotation autour d'axes s'étendant orthogonalement l'un par rapport à l'autre,
- la face arrière (22) de la plaque dentée (20) est accessible par une ouverture (16) dans une interface utilisateur (14) du dispositif de commande (10),
- la première disposition de roue dentée peut être couplée à un premier dispositif et la seconde disposition de roue dentée (40) peut être couplée à un second dispositif, et
- et la plaque dentée (20) est formée par deux crémaillères qui se croisent sur deux axes.

2. Dispositif de commande selon la revendication 1, dans lequel des blocs de paliers (18) sont disposés à l'arrière (13) de la surface de commande (14).

3. Dispositif de commande selon la revendication 2, dans lequel au moins une première roue dentée (30) de la première disposition de roue dentée et/ou la au moins une deuxième roue dentée (42) de la deuxième disposition de roues dentée (40) sont montées en rotation par l'intermédiaire des blocs de paliers (18).

4. Dispositif de commande selon l'une des revendications 1 à 3, dans lequel au moins une première roue dentée (30) de la première disposition de roue dentée et au moins une deuxième roue dentée (42) de la deuxième disposition de roues dentée (40) sont montés
de manière à pouvoir tourner autour d'axes situés dans le même plan et présentent sensiblement les mêmes diamètres extérieurs.

5. Dispositif de commande selon la revendication 4, dans lequel au moins une première roue dentée (30) ou au moins une deuxième roue dentée (42) est montée à rotation par l'intermédiaire d'une pièce de liaison (50) sur un arbre de palier (45) pour
au moins une deuxième roue dentée (42) ou au moins une première roue dentée (30).

6. Dispositif de commande selon l'une des revendications 1 à 5, dans lequel au moins une première roue dentée (30) de la première disposition de roues dentées et/ou au moins une deuxième roue dentée (42) de la deuxième disposition de roues dentées (40) sont couplées au premier dispositif et/ou au deuxième dispositif par leurs arbres de palier (45) ou par les roues dentées (30 ; 42 ; 44)
elles-mêmes.

7. Dispositif de commande selon l'une des revendications 1 à 6, dans lequel la zone de la face arrière (22) de la plaque dentée (20) accessible par l'ouverture (16) présente un évidement.

8. Dispositif de commande selon l'une des revendications 1 à 7, dans lequel au moins la zone de la face arrière (22) de la plaque dentée (20) accessible par l'ouverture (16) comporte au moins un marquage, un symbole et/ou une zone éclairable.

9. Dispositif de commande selon l'une des revendications 1 à 8, dans lequel des éléments d'amortissement sont disposés sur la plaque dentée (20) et/ou sur les blocs de paliers (18).
